# EUROPEAN PATENT APPLICATION

(11) **EP 3 943 457 A1**
(43) Date of publication of application: **26.01.2022**
(21) Application number: 21187481.3
(22) Date of filing: 23.07.2021
(51) Int. Cl.: C03B 23/035

(54) **METHOD AND CHUCK FOR FORMING TIGHT BEND RADIUS GLASS SHAPES**

(30) Priority: 24.07.2020 US 202063056164 P
(71) Applicant: Corning Incorporated, Corning, New York 14831 (US)
(72) Inventor: GALGALIKAR, Rohan Ram, Painted Post, 14870 (US); LAYOUNI, Khaled, 77300 Fontainebleau (FR); LIU, Dani, Corning, 14830 (US); SMITH, Kimberly Wilbert, Hammondsport, 14840 (US); TIMMONS, Christopher Lee, Big Flats, 14814 (US)
(74) Representative: Epping - Hermann - Fischer

(57) **Abstract**

Disclosed is a method of forming a glass article in which a glass sheet is bent over a forming surface of a chuck. The forming surface defines a first shape including a curvature having a radius of curvature of 1000 mm or less, and the glass sheet includes a first major surface in contact with the forming surface. A frame is adhered to a second major surface of the glass sheet. The frame includes a frame support surface defining a second shape including a second curvature having a second radius of curvature of 1000 mm or less. A total force is applied to the glass sheet so that the glass sheet forms a third shape including a third curvature having a third radius of curvature of 1000 mm or less. The third shape deviates from the second shape by 2 mm or less across the frame support surface.

## Description

### CROSS-REFERENCE TO RELATED APPLICATIONS

This application claims the benefit of priority under 35 U.S.C. § 119 of U.S. Provisional Application Serial No. 63/056,164 filed on July 24, 2020, the content of which is relied upon and incorporated herein by reference in its entirety.

### BACKGROUND

The disclosure relates to a method of forming a curved glass article and, more particularly, to a method of forming a curved glass article having a tight bend radius and small shape deviation. Vehicle interiors include curved surfaces and can incorporate displays in such curved surfaces. The materials used to form such curved surfaces are typically limited to polymers, which do not exhibit the durability and optical performance as glass. As such, curved glass sheets are desirable, especially when used as covers for displays. Existing methods of forming such curved glass sheets, such as thermal forming, have drawbacks including high cost, optical distortion, and surface marking. Additionally, to meet manufacturing demands, several forming apparatuses are needed for each processing line, and because of the number of forming apparatuses needed, the forming apparatuses are preferably relatively inexpensive to manufacture and use. Accordingly, Applicant has identified a need for vehicle interior systems that can incorporate a curved glass sheet in a cost-effective manner and without problems typically associated with glass thermal forming processes.

### SUMMARY

According to an aspect, embodiments of the disclosure relate to a method of forming a glass article. In the method, a glass sheet is bent over a forming surface of a chuck. The forming surface defines a first shape including a first curvature having a first radius of curvature of 1000 mm or less, and the glass sheet includes a first major surface in contact with the forming surface and a second major surface opposite to the first major surface. A frame is adhered to the second major surface of the glass sheet. The frame includes a frame support surface defining a second shape including a second curvature having a second radius of curvature of 1000 mm or less. A total force is applied to the glass sheet so that the glass sheet forms a third shape including a third curvature having a third radius of curvature of 1000 mm or less. The third shape deviates from the second shape by 2 mm or less across the frame support surface.

According to another aspect, embodiments of the disclosure relate to a system for forming a glass article. The glass article includes a glass sheet adhered to a frame. The system includes a chuck with a forming surface including a first curvature having a first radius of curvature of 1000 mm or less. The system also includes at least one retainer configured to apply a first force to the glass sheet to hold the glass sheet against the forming surface.

According to still another aspect, embodiments of the disclosure relate to a system for forming a glass article. The glass article includes a glass sheet adhered to a frame. The system includes a chuck with a forming surface including a first curvature having a first radius of curvature of 1000 mm or less. The system also includes a clamping cover configured to hold the frame. The clamping cover includes a spacer disposed adjacent to the frame. The spacer applies a first force to the glass sheet during forming of the glass article.

According to still another aspect, embodiments of the disclosure relate to a glass article. The glass article includes a glass sheet having a first major surface and a second major surface opposite to the first major surface. The second major surface defines a first shape including a first curvature having a first radius of curvature of 250 mm or less. The glass article also includes a frame adhered to the second major surface of the glass sheet. The frame has a frame support surface defining a second shape comprising a second curvature having a second radius of curvature of 250 mm or less. The first shape deviates from the second shape by 0.2 mm or less across the frame support surface.

Additional features and advantages will be set forth in the detailed description which follows, and in part will be readily apparent to those skilled in the art from that description or recognized by practicing the embodiments as described herein, including the detailed description which follows, the claims, as well as the appended drawings.

It is to be understood that both the foregoing general description and the following detailed description are merely exemplary, and are intended to provide an overview or framework to understanding the nature and character of the claims. The accompanying drawings are included to provide a further understanding, and are incorporated in and constitute a part of this specification. The drawings illustrate one or more embodiment(s), and together with the description serve to explain principles and operation of the various embodiments.

### BRIEF DESCRIPTION OF THE DRAWINGS

FIG. 1 is a perspective view of a vehicle interior with vehicle interior systems, according to exemplary embodiments.
FIGS. 2A and 2B depict a V-shaped and a C-shaped curved glass article, respectively according to an exemplary embodiment.
FIG. 3 depicts an exploded perspective view of a glass article and process chuck, according to an exemplary embodiment.
FIG. 4 depicts a vacuum chuck having vacuum channels for cold-forming a curved glass article, according to an exemplary embodiment.
FIG. 5 depicts a graph of shape deviation at various radii of curvature for three different glass thicknesses.
FIG. 6 depicts a source of shape deviation for a glass sheet on a vacuum chuck.
FIG. 7 depicts shape deviation of a glass sheet on a chuck without vacuum channels.
FIG. 8 depicts shape deviation from desired curvature across a glass sheet cold-bent using conventional techniques.
FIG. 9 depicts a cold-forming system including a robotic positioning arm, according to an exemplary embodiment.
FIGS. 10A-10C depict a spacer used to apply a force to a glass sheet during cold-forming, according to an exemplary embodiment.
FIG. 11A-11F depict various configurations of the spacer, according to exemplary embodiments.
FIGS. 12A-12C depict locations in which the spacer may be placed in order to reduce shape deviation of a cold-formed glass article, according to exemplary embodiments.
FIGS. 13A-13B depict a plurality of retainers configured to apply a mechanical force to an edge of a glass sheet, according to exemplary embodiments.
FIGS. 14A-14B depict a plurality of retainers configured to apply a mechanical force to an edge of a glass sheet, according to exemplary embodiments.
FIGS. 15A-15B depict a plurality of retainers configured to apply a mechanical force to an edge of a glass sheet, according to exemplary embodiments.
FIGS. 16A and 16B depict a clamping cover of a frame incorporating a spacer, according to an exemplary embodiment.
FIG. 17A and 17B depict an embodiment of a process chuck having a curvature designed to take into account expected shape deviation in the final glass article, according to an exemplary embodiment.
FIG. 18 depicts geometric dimensions of a glass sheet, according to an exemplary embodiment.

### DETAILED DESCRIPTION

Reference will now be made in detail to various embodiments, examples of which are illustrated in the accompanying drawings. In general, the present disclosure is directed to a method and system for cold-forming a glass article having a tight bend radius (e.g., ≤ 1000 mm, in particular ≤ 250 mm) in such a manner that the shape deviation is within an acceptable tolerance threshold (e.g., 2.0 mm or less, in particular 0.2 mm or less). Applicant has found that conventional vacuum cold-forming techniques may not provide sufficient force to maintain a glass sheet in conformity with tight curvatures defined by a process chuck. Accordingly, embodiments of the present disclosure provide ways to increase the forces on the glass sheet during forming, using spacers and retainers, so that the shape deviation of the glass article from the tight curvatures is reduced to acceptable tolerances or eliminated entirely. Additionally, the mechanical forces are applied in such a way and in particular locations designed to effectively address the issue of shape deviation during cold forming.

In order to provide context for the processes and systems described herein, exemplary embodiments of curved glass articles that can be formed thereby will be described in relation to the particular application of a vehicle interior system.

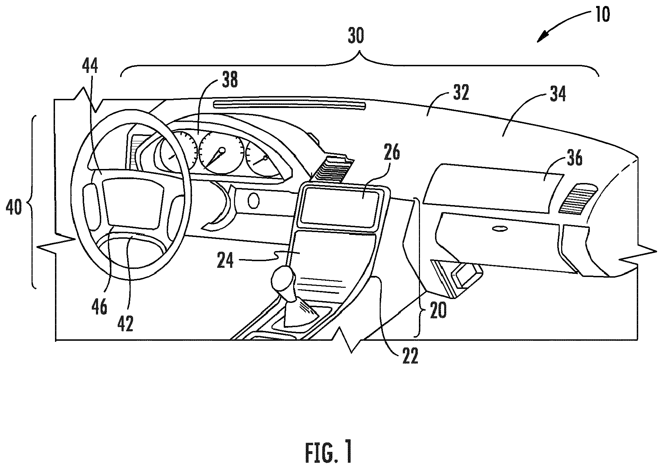

FIG. 1 shows an exemplary interior 10 of a vehicle that includes three different embodiments of vehicle interior systems 20, 30, 40. Vehicle interior system 20 includes a base, shown as center console base 22, with a curved surface 24 including a display 26. Vehicle interior system 30 includes a base, shown as dashboard base 32, with a curved surface 34 including a display 36. The dashboard base 32 typically includes an instrument panel 38 which may also include a display. Vehicle interior system 40 includes a base, shown as steering wheel base 42, with a curved surface 44 and a display 46. In one or more embodiments, the vehicle interior system includes a base that is an arm rest, a pillar, a seat back, a floor board, a headrest, a door panel, or any portion of the interior of a vehicle that includes a curved surface.

The embodiments of the curved glass articles described herein can be used in each of vehicle interior systems 20, 30, 40, among others. In some such embodiments, the glass article discussed herein may include a cover glass sheet that also covers non-display surfaces of the dashboard, center console, steering wheel, door panel, etc. In such embodiments, the glass material may be selected based on its weight, aesthetic appearance, etc. and may be provided with a coating (e.g., an ink or pigment coating) including a pattern (e.g., a brushed metal appearance, a wood grain appearance, a leather appearance, a colored appearance, etc.) to visually match the glass components with adjacent non-glass components. In specific embodiments, such ink or pigment coating may have a transparency level that provides for deadfront or color matching functionality when the display 26, 36, 38, 46 is inactive. Further, while the vehicle interior of FIG. 1 depicts a vehicle in the form of an automobile (e.g., cars, trucks, buses and the like), the glass articles disclosed herein can be incorporated into other vehicles, such as trains, sea craft (boats, ships, submarines, and the like), and aircraft (e.g., drones, airplanes, jets, helicopters and the like).

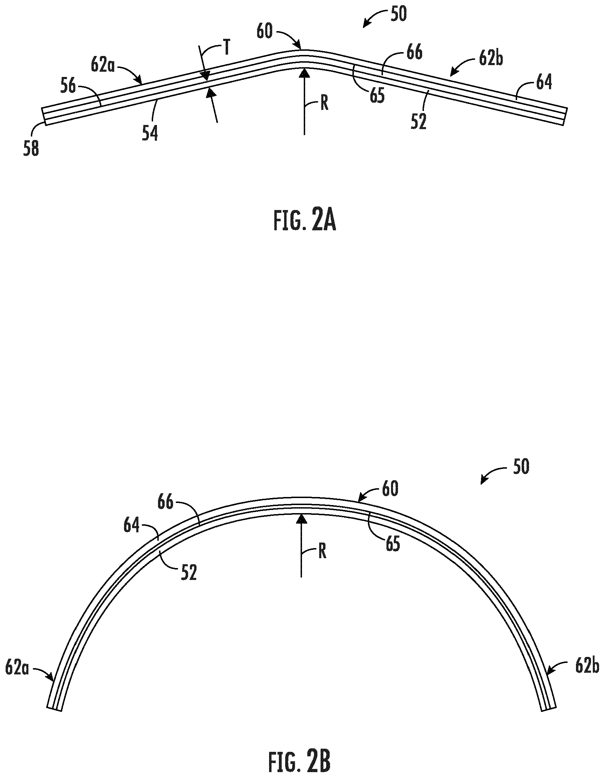

In embodiments, the curved surfaces 24, 34, 44 can be any of a variety of curved shapes, such as V-shaped or C-shaped curved glass articles as shown in FIGS. 2A and 2B, respectively. Referring first to FIG. 2A, a side view of an embodiment of a V-shaped glass article 50 is shown. The glass article 50 includes a glass sheet 52 having a first major surface 54, a second major surface 56 opposite to the first major surface 54, and a minor surface 58 joining the first major surface 54 to the second major surface 56. The first major surface 54 and the second major surface 56 define a thickness T of the glass sheet 52. In embodiments, the thickness T of the glass sheet 52 is from 0.3 mm to 2 mm, in particular 0.5 mm to 1.1 mm. In a vehicle, the first major surface 54 faces the occupants of the vehicle. Further, in embodiments, the second major surface 56 may have a display module (e.g., display 26, 36, 38, 46 of FIG. 1) mounted thereon, such as a light-emitting diode (LED) display, an organic LED (OLED) display, a micro-LED display, a liquid crystal display (LCD), or a plasma display.

In embodiments, the first major surface 54 and/or the second major surface 56 includes one or more surface treatments. Examples of surface treatments that may be applied to one or both of the first major surface 54 and second major surface 56 include an anti-glare coating, an anti-reflective coating, a coating providing touch functionality, a decorative (e.g., ink or pigment) coating, and an easy-to-clean coating.

As can be seen in FIG. 2A, the glass sheet 52 has a curved region 60 disposed between a first flat section 62a and a second flat section 62b. In embodiments, the curved region 60 has a radius of curvature R that is from 50 mm to a radius of curvature that is less than substantially flat or planar (e.g., R =10 m). According to the present disclosure, the forming methods and system are particularly suitable for forming a curved region 60 having a radius of curvature R that is 1000 mm or less, in particular 250 mm or less. Further, as shown in FIG. 2A, the curved region 60 defines a concave curve with respect to the first major surface 54, but in other embodiments, the curved region 60 is instead a convex curve with respect to the first major surface 54.

In the glass article 50 of FIG. 2A, a frame 64 is adhered to the second major surface 56 of the glass sheet 52 using an adhesive layer 66. In embodiments, the adhesive layer 66 is a structural adhesive, such toughened epoxy, flexible epoxy, acrylics, silicones, urethanes, polyurethanes, and silane modified polymers. In embodiments, the adhesive layer 66 has a thickness of 2 mm or less between the frame 64 and the glass sheet 52.

In part, the frame 64 facilitates mounting the glass article 50 to a vehicle interior base (such as center console base 22, dashboard base 32, and/or steering wheel base 42 as shown in FIG. 1). Additionally, the frame 64 has a curved frame support surface 65 that holds the glass sheet 52 in its curved shape (at least in the curved region 60). In embodiments, the glass sheet 52 is formed in such a way that the curved region 60 is not permanent. That is, the glass sheet 52 would spring back to a planar, non-curved configuration if the glass sheet 52 was not adhered to the frame 64 using the adhesive layer 66. Thus, the glass sheet 52 is stressed to produce the curvature and remains stressed during the life of the glass article 50. In this way, maintaining the desired curvature, especially at tight bend radiuses, is important during forming of the curved glass article 50.

FIG. 2B depicts another embodiment of a glass article 50, in particular a C-shaped glass article 50. As compared to the V-shaped glass article 50 of FIG. 2A, the C-shaped glass article 50 of FIG. 2B has a larger curved region 60 and shorter flat sections 62a, 62b. The V-shape and C-shape are but two examples of curved glass articles 50 that can be created according to the present disclosure. In other embodiments, the glass articles 50 can include curved regions 60 having opposing curvatures to create an S-shape, a curved region 60 followed by a flat section 62a to create a J-shape, and curved regions 60 separated by a flat section 62a to create a U-shape, among others.

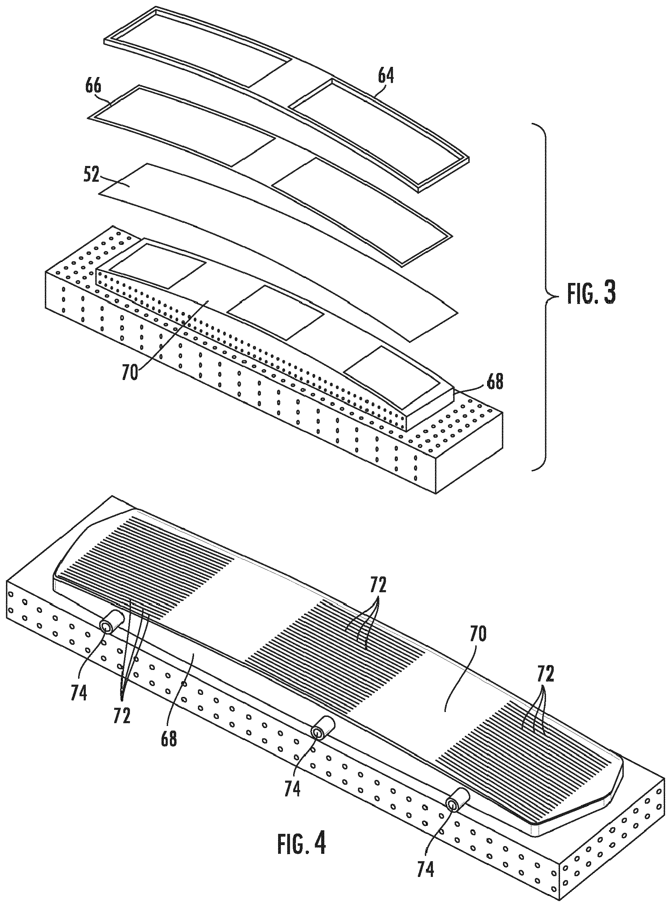

The glass articles 50 according to the present disclosure are formed by cold-forming techniques. In general, the process of cold-forming involves application of a bending force to the glass sheet 52 while the glass sheet 52 is situated on a chuck 68 as shown in the exploded view of FIG. 3. As can be seen, the chuck 68 has a curved forming surface 70, and the glass sheet 52 is bent into conformity with the curved forming surface 70. Advantageously, it is easier to apply surface treatments to a flat glass sheet 52 prior to creating the curvature in the glass sheet 52, and cold-forming allows the treated glass sheet 52 to be bent without destroying the surface treatment (as compared to the tendency of high temperatures associated with hot-forming techniques to destroy surface treatments, which requires surface treatments to be applied to the curved article in a more complicated process). In embodiments, the cold forming process is performed at a temperature less than the glass transition temperature of the glass sheet 52. In particular, the cold forming process may be performed at room temperature (e.g., about 20 °C) or a slightly elevated temperature, e.g., at 200 °C or less, 150 °C or less, 100 °C or less, or at 50 °C or less.

In the embodiment shown in FIG. 4, the bending force applied to the glass sheet 52 is, in part, in the form of vacuum pressure pulled through the chuck 68. In embodiments, the chuck 68 includes one or more sets of surface channels 72. Each set of surface channels 72 is in fluid communication with a vacuum conduit 74 that extend transversely across its respective set of surface channels 72. In this way, vacuum can be pulled through each set of the surface channels 72 from the respective vacuum conduit 74 fluidly connecting them. This vacuum pressure holds the glass sheet 52 against the chuck and in conformity with the curvature of the forming surface 70. In other embodiments, the vacuum pressure may be pulled through a plurality of ports on the forming surface 70.

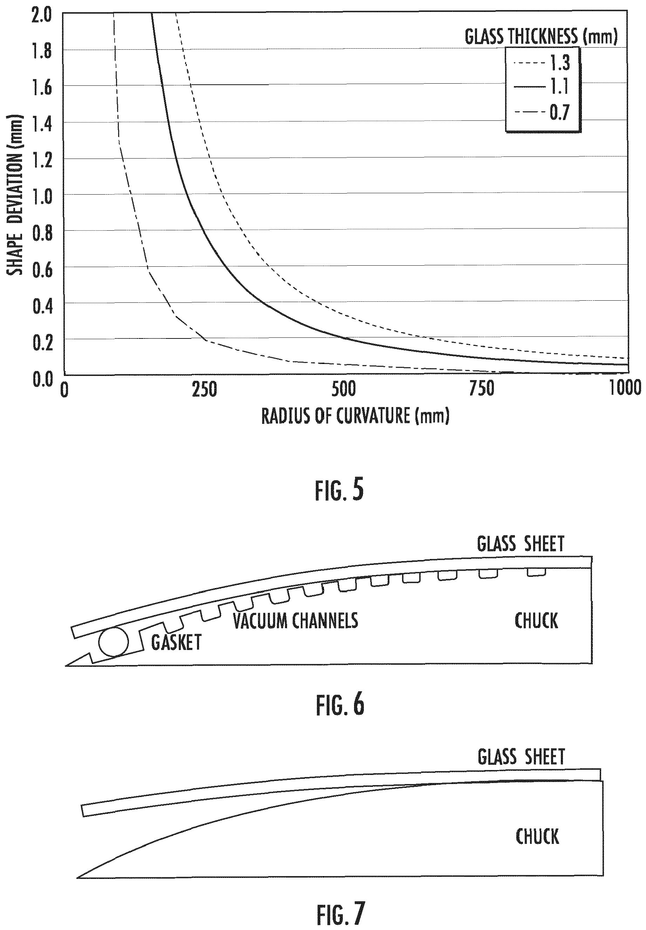

When the glass sheet is bent over the forming surface of the chuck, the glass sheet can deflect from the desired curvature despite the vacuum pressure holding the glass sheet 52 into contact with the curved forming surface. With respect to the present disclosure, the desired curvature is defined by either the curvature of the forming surface or the curvature of the frame support surface. As used herein, "shape deviation" refers to the deflection of the glass sheet from the desired curvature. As the radius of curvature decreases (i.e., at a tighter bend radius), the glass sheet will tend to deflect more as shown in FIG. 5. Further, thicker glass sheets will deflect more than relatively thinner glass sheets at the same radius of curvature. Thus, for example, at a radius of curvature of 250 mm, a glass sheet having a thickness of 0.7 mm may have a shape deviation of about 0.2 mm whereas a glass sheet having a thickness of 1.1 mm may have a shape deviation of about 0.8 mm and a glass sheet having a thickness of 1.3 mm may have a shape deviation of about 1.3 mm. As can be seen in FIG. 5, the deflection increases rapidly at curvatures below 250 mm for each glass thickness shown.

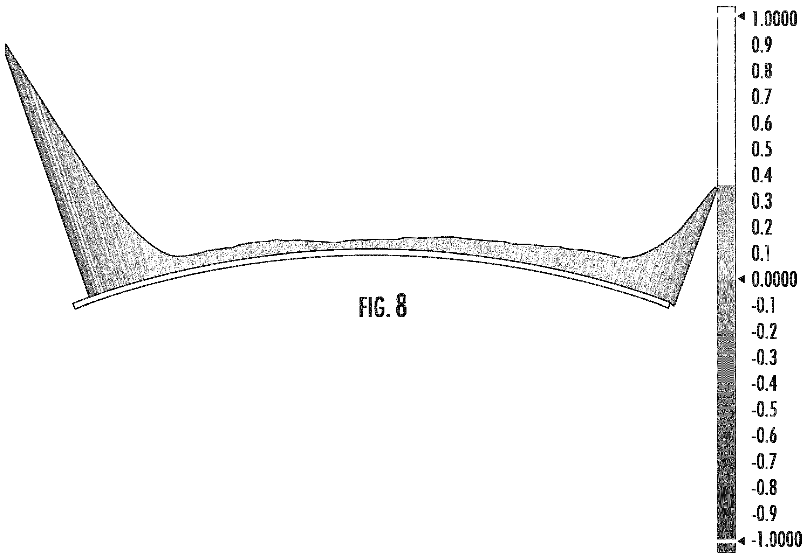

FIG. 6 depicts a glass sheet in contact with a forming surface of a chuck. As can be seen, the vacuum channels generally hold the glass sheet into contact with the forming surface except at an end region of the chuck. As can be seen, the end region includes a gasket designed to maintain the vacuum seal with the glass sheet, but the vacuum pressure alone is not sufficient to compress the gasket so as to completely eliminate deflection from the desired curvature (which, in this case, is defined by the curvature of the forming surface). In this regard, the maximum vacuum force that can be applied to the glass sheet is the atmospheric pressure multiplied by the surface area of the second major surface of the glass sheet. FIG. 7 depicts a shape deviation of the glass sheet from the forming surface of a chuck that does not include a vacuum feature. Shape deviation such an instance may be the result of, for example, uneven pressure applied to the glass sheet during cold-forming or using a glass sheet too thick for the curvature. FIG. 8 depicts shape deviation from desired curvature across the first major surface of a glass sheet having a thickness of 0.7 mm cold-bent to a radius of curvature of 208 mm using conventional techniques. As can be seen, shape deviation can be as high as about 1 mm at end regions of the glass sheet using conventional cold-forming techniques.

According to the present disclosure, various methods of cold-forming a glass sheet to mitigate such shape deviation to an acceptable tolerance (e.g., 0.2 mm or less) are provided. In particular, in the various embodiments of the methods of cold-forming disclosed herein, a total force is applied to the glass sheet to hold it in compliance with the forming surface in which the total force is greater than the surface area of the glass sheet in contact with the forming surface multiplied by atmospheric pressure.

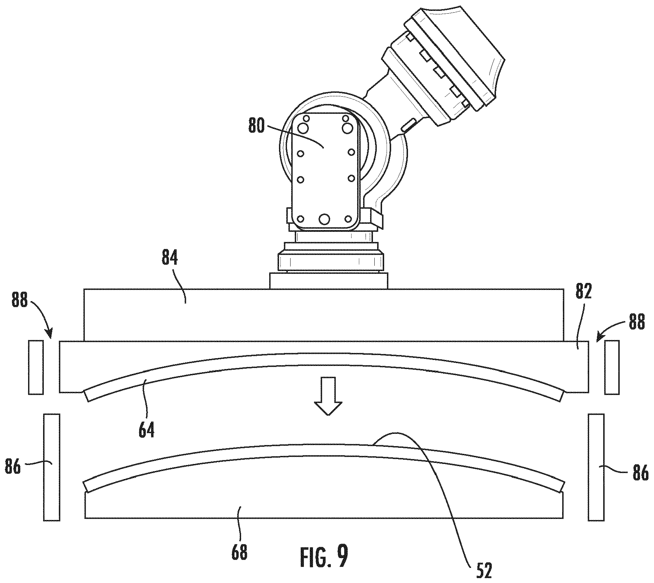

In the system according to the present disclosure, the frame 64 may be positioned over the glass sheet 52 on the chuck 68 using a robotic positioning arm 80 as shown in FIG. 9. The robotic positioning arm 80 carries a clamping cover 82 that carries the frame 64. In embodiments, the robotic positioning arm 80 is connected to a force distribution plate 84 that spreads the force of the robotic arm 80 over the clamping cover 82. In the embodiment of FIG. 9, positioning guides 86 interact with alignment features 88 of the clamping cover 82 to position the frame 64 over the glass sheet 52. In this way, the glass article 50 can be assembled accurately and in an automated manner. During cold-forming, the robotic positioning arm 80 may pick up a frame 64 using the clamping cover 82. The robotic positioning arm 80 then places the frame 64 over the glass sheet 52 on the chuck 68. The adhesive layer 66 (not shown) is applied to either the frame 64 or glass sheet 52 or to both. The robotic positioning arm 80 then pushes the frame 64 onto the glass sheet 52, spreading the adhesive layer 66 to achieve a consistent bondline thickness. The robotic positioning arm 80 holds the frame 64 over the glass sheet 52 until the adhesive layer 66 has cured sufficiently that the glass sheet 52 will not deviate from the desired cold-formed shape.

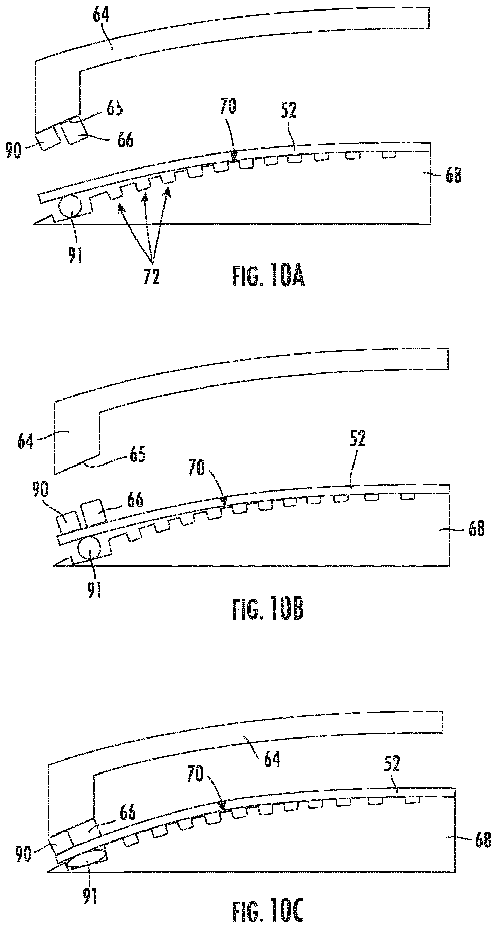

In order to achieve and maintain the desired cold-formed shape, the robotic positioning arm 80 may be used in conjunction with other mechanical retaining devices to prevent or limit shape deviation. FIGS. 10A-10C depict an embodiment in which shape deviation is minimized using a spacer 90. As can be seen in FIGS. 10A and 10B, the spacer 90 may be positioned on the frame support surface 65 (FIG. 10A) or the second major surface 56 of the glass sheet 52 (FIG. 10B). The spacer 90 is a component that applies mechanical force to the glass sheet 52 during cold forming when the frame 64 is pressed onto the glass sheet 52. In embodiments, the spacer 90 is positioned adjacent to the adhesive layer 66 between the frame 64 and the glass sheet 52 and allows mechanical forces imparted, e.g., by the robotic positioning arm 80 to be transferred through the frame 64 to the glass sheet 52 so as to keep the glass sheet 52 in conformity with the forming surface 70 of the chuck 68. In embodiments, the spacer 90 is a rigid metal, ceramic, polymer, or composite material that does not compress substantially when force is applied by the robotic positioning arm 80 through the frame 64. In other embodiments, the spacer 90 is made of a compliant material, such as rubber, but the spacer 90 still transfers force, e.g., from the positioning arm 80 through the frame 64 to the glass sheet 52.

The chuck 68 is depicted as a vacuum chuck having vacuum channels 72 through which vacuum is pulled to keep the first major surface 54 of the glass sheet 52 in conformity with the curvature of the forming surface 70. Ordinarily, the robotic positioning arm 80 would not be able to exert substantial force on the glass sheet 52 without causing the adhesive layer 66 to seep out between the frame 64 and glass sheet 52. By incorporating the spacer 90, forces from the robotic positioning arm 80 can be imparted to the glass sheet 52, especially in edge regions where shape deviation is greatest, to prevent or limit such shape deviation. For example, as compared to FIG. 6, the mechanical force imparted through the spacer 90 allows additional force to compress an edge gasket 91 shown in FIG. 10C, providing better conformity with the desired curvature defined by the forming surface 70 of the chuck 68. As also shown in FIG. 10C, the spacer 90 defines the adhesive layer 66 thickness in the final cold-formed glass article 50.

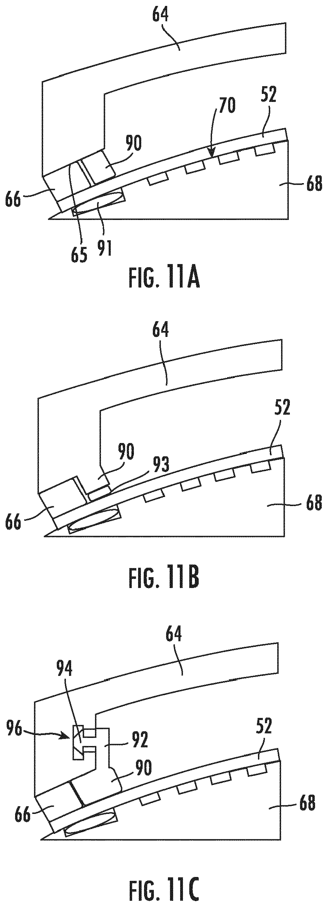

FIGS. 11A-11F depict a variety of different embodiments of a spacer 90. In the embodiment of FIG. 11A, the spacer 90 is placed inside the bondline of the adhesive layer 66 (as compared to outside the bondline as shown in in FIG. 10C). FIG. 11B depicts an embodiment in which the spacer 90 is a projection of the frame support surface 65. That is, the spacer 90 may be, in embodiments, part of a unitary construction with the frame 64. The frame 64 is generally made of a rigid material, such as a metal (e.g., aluminum or steel alloy), which might otherwise scratch the glass sheet 52. Thus, in embodiments, the spacer 90 may be coated with a buffer material 93, such as a polymer material, to prevent scratching of the glass sheet 52.

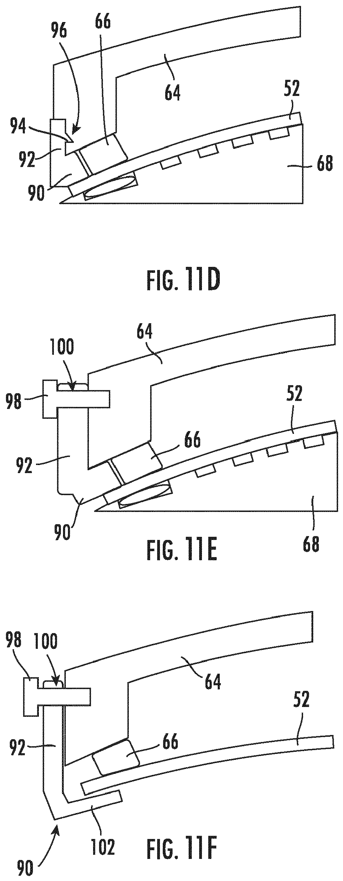

In FIG. 11C, the spacer 90 is clipped onto the interior of the frame 64. In particular, the spacer 90 includes a vertical arm 92 having a horizontal projection 94 configured to engage a slot 96 on the interior of the frame 64. In embodiments, the mechanical projection 94 and slot 96 may be a snaplock engagement or slidable arrangement. In FIG. 11D, the spacer 90 is clipped to the exterior of the frame 64. As with the previous embodiment, the spacer includes a vertical arm 92 having a horizontal projection 94 configured to engage a slot 96 on the exterior of the frame 64.

FIG. 11E depicts another embodiment of the spacer 90 in which the spacer 90 is temporarily attached to the exterior of the frame 64 using a fastener 98 (such as a screw or pin). In particular, the spacer 90 includes a vertical arm 92 including an aperture 100 through which the fastener 98 is inserted to connect the spacer 90 to the frame 64. When the adhesive layer 66 is cured after cold-forming, the fastener 98 can be removed so that the spacer 90 can be removed from the finished glass article 52.

FIG. 11F depicts another embodiment of the spacer 90 that engages the first major surface 54 of the glass sheet 52. In this embodiment, the support surface 65 of the frame 64 defines the desired curvature of the glass article 52. In this regard, the spacer 90 pulls the glass sheet 52 into conformity with the support surface 65. In the embodiment depicted, the spacer 90 includes a vertical arm 92 and a horizontal arm 102. The vertical arm 92 extends along the exterior of the frame 64 and includes an aperture 100 through which a fastener 98 is inserted to engage the frame 64. The horizontal arm 102 extends under the glass sheet 52 to engage the first major surface 54 of the glass sheet 52. In this way, the spacer 90 pulls the glass sheet 52 into the shape defined by the frame support surface 65 or prevents the glass sheet 52 from deflecting out of the desired shape.

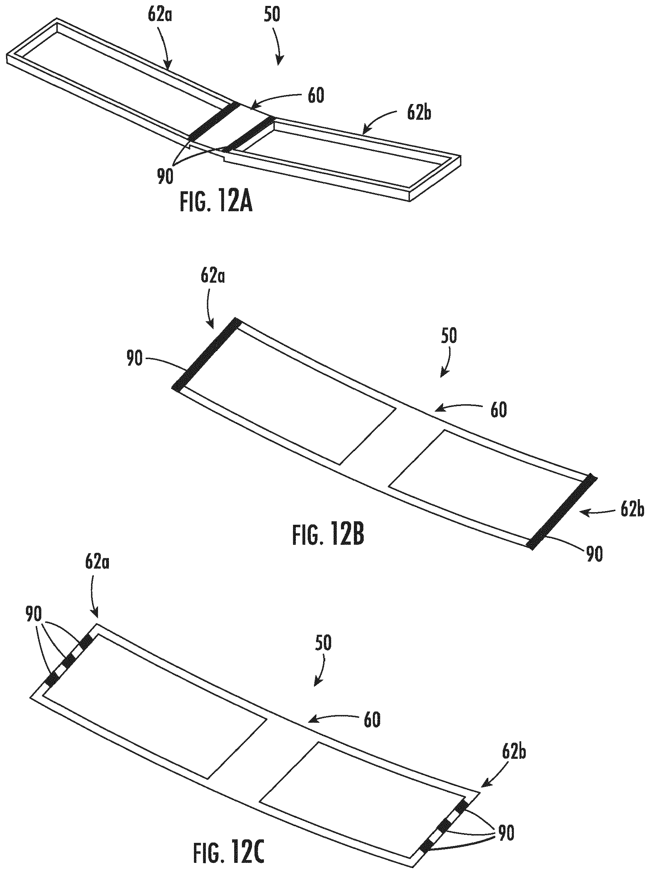

FIGS. 12A-12C depict positions where the spacers 90 may be used to maintain the desired shape of the glass sheet 52. In particular, the spacers 90 are located at the edges of the curved region 60 of the glass article 52. Thus, for example, in a V-shaped glass article 52 as shown in FIG. 12A, the spacers 90 are positioned towards the interior of the glass article 52 where the curved region 60 transitions to the flat sections 62a, 62b. For the C-shaped glass article 52 shown in FIG. 12B, the spacers 90 may be located toward the edges of the glass article 52. As discussed above, the curved region 60 of a C-shaped glass article 52 is more extensive than in a V-shaped glass article 52, and thus, the flat sections 62a, 62b are smaller. Notwithstanding, the spacers 90 would still be positioned proximate to where the curved region 60 transitions to the flat sections 62a, 62b. Further, as show in FIG. 12C, the spacers 90, in embodiments, do not extend continuously along the transition between curved region 60 and flat section 62a, 62b. Instead, the spacers 90 may be intermittently positioned along the transition between curved region 60 and flat sections 62a, 62b.

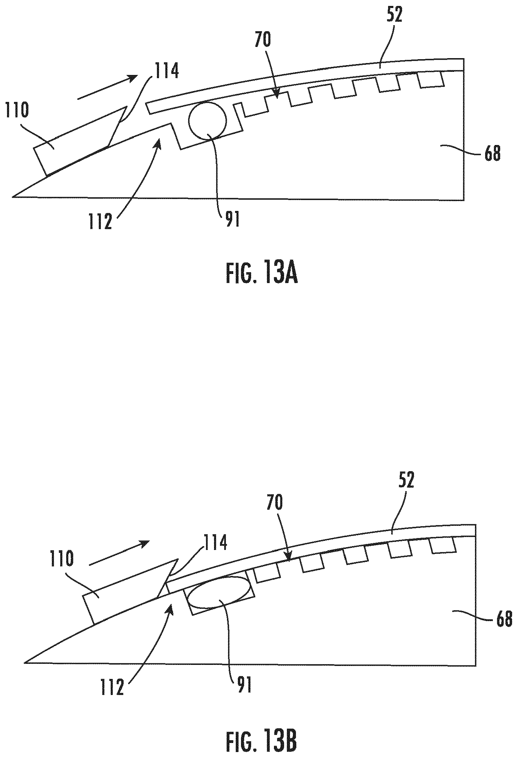

FIGS. 13A-13B, FIGS. 14A-14B and FIGS. 15A-15B depict various embodiments of retainers 110 incorporated with the chuck 68. FIG. 13A depicts a retainer 110 that slides laterally over the forming surface 70 to hold down an edge 112 of the glass sheet 52 to maintain conformity of the glass sheet 52 with the forming surface 70. The retainer 110 includes an angled retaining surface 114. When the glass sheet 52 is cold-bent over the forming surface 70, the retainer 110 is slid into place as shown in FIG. 13B such that the angled retaining surface 114 applies an increasing mechanical force to the edge 112 of the glass sheet 52 that is sufficient to compress the gasket 91. Further, the retainer 110 may simply hold the edge 112 of the glass sheet 52 in conformity with the forming surface 70 even in the absence of a gasket 91, such as for example if the thickness of the glass sheet 52 tends to cause the glass sheet 52 to deflect away from the forming surface 70.

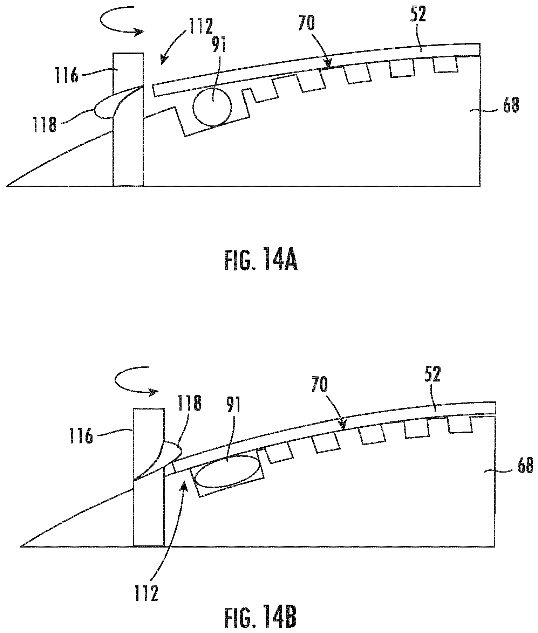

FIG. 14A depicts another embodiment of a retainer 110 that swivels in order to apply a mechanical force to the edge 112 of the glass sheet 52. The retainer 110 includes a post 116 having a ramped surface 118 projecting radially from the post. When the glass sheet 52 is cold-bent over the forming surface 70, the post 116 is rotated so that the ramped surface 118 exerts a force over the second major surface 54 of the glass sheet 52 that increases as the post 116 swivels. In this way, the retainer 110 maintains the glass sheet 52 in conformity with the forming surface 70 of the chuck 68 as shown in FIG. 14B.

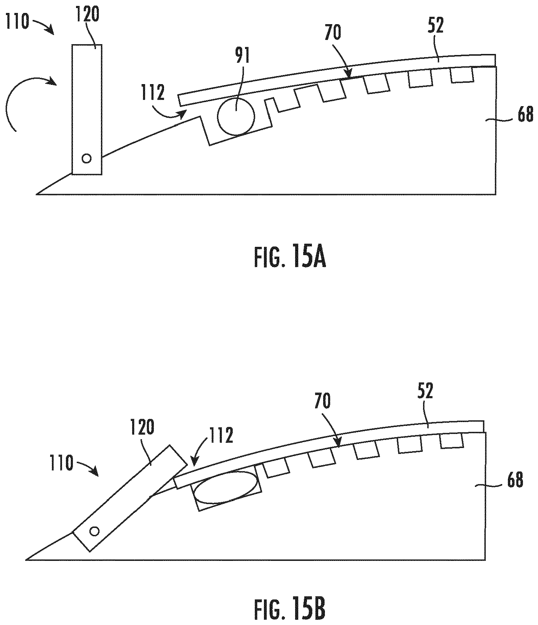

FIG. 15A depicts still another embodiment of a retainer 110 having a rotating arm 120. When the glass sheet 52 is initially cold-bent over the forming surface 70, the rotating arm 120 is in a first position depicted as vertical in FIG. 15A. Thereafter, the rotating arm 120 is rotated so that it contacts the second major surface 54 of the glass sheet 52 as shown in FIG. 15B. When rotated into contact with the glass sheet 52, the rotating arm 120 exerts a force on the edge 112 glass sheet 52 that keeps the glass sheet 52 in conformity with the forming surface 70 of the chuck 68.

In each of the foregoing embodiments described in relation to FIGS. 13A-13B, FIGS. 14A-14B and FIGS. 15A-15B, the retainer 110 may be spring actuated or electro-mechanically actuated using, e.g., a servomotor. Further still, the foregoing embodiments of the retainers 110 may be actuated manually by a user.

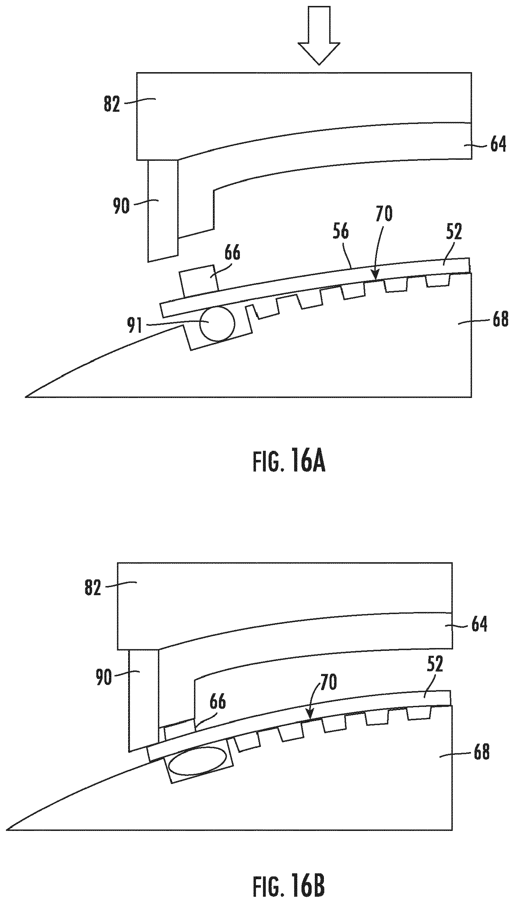

FIGS. 16A and 16B depict an embodiment in which the clamping cover 82 includes a spacer 90. Referring first to FIG. 16A, the glass sheet 52 is cold bent over the forming surface 70 of the chuck 68. The adhesive layer 66 is applied to the second major surface 56, and the clamping cover 82 lowers the frame 64 over the glass sheet 52. As the clamping cover 82 moves toward the glass sheet 52 as shown in FIG. 16B, the spacer 90 engages the second major surface 56 of the glass sheet 52, applying a mechanical force to an edge 112 of the glass sheet 52 to place the glass sheet 52 into conformity with the forming surface 70 of the chuck 68. After the glass article 50 has cured, the clamping cover 82 is withdrawn such that the finished glass article 50 does not incorporate the spacer 90.

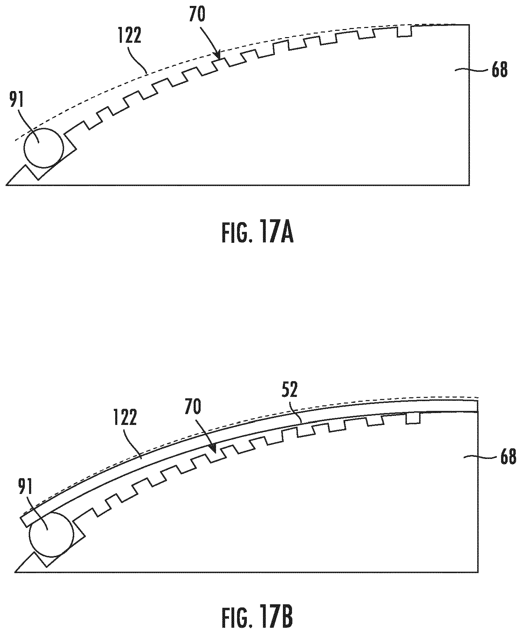

FIG. 17A and 17B depict an embodiment in which the chuck 68 is designed such that the forming surface 70 does not define the desired curvature of the glass article 50. Instead, as shown by the dashed line 122, the curvature takes into account the expected deflection of the glass sheet 52 from the forming surface 70, e.g., as a result of a perimeter gasket 91. In this way, the chuck 68 is provided with a forming surface 70 having a curvature that is deliberately smaller than the desired final curvature of the glass article 50.

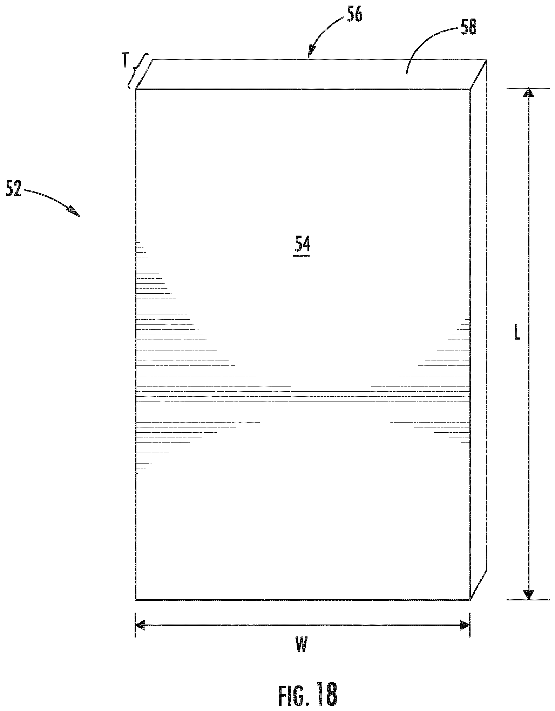

Referring to FIG. 18, additional structural details of glass sheet 52 are shown and described. As noted above, glass sheet 52 has a thickness T that is substantially constant and is defined as a distance between the first major surface 54 and the second major surface 56. In various embodiments, T may refer to an average thickness or a maximum thickness of the glass sheet. In addition, glass sheet 52 includes a width W defined as a first maximum dimension of one of the first or second major surfaces 54, 56 orthogonal to the thickness T, and a length L defined as a second maximum dimension of one of the first or second major surfaces 54, 56 orthogonal to both the thickness and the width. In other embodiments, W and L may be the average width and the average length of glass sheet 52, respectively.

In various embodiments, average or maximum thickness T is in the range of 0.3 mm to 2 mm. In various embodiments, width W is in a range from 5 cm to 250 cm, and length L is in a range from about 5 cm to about 1500 cm. As mentioned above, the radius of curvature (e.g., R as shown in FIGS. 2A and 2B) of glass sheet 52 is about 30 mm to about 1000 mm.

In embodiments, the glass sheet 52 may be strengthened. In one or more embodiments, glass sheet 52 may be strengthened to include compressive stress that extends from a surface to a depth of compression (DOC). The compressive stress regions are balanced by a central portion exhibiting a tensile stress. At the DOC, the stress crosses from a positive (compressive) stress to a negative (tensile) stress.

In various embodiments, glass sheet 52 may be strengthened mechanically by utilizing a mismatch of the coefficient of thermal expansion between portions of the article to create a compressive stress region and a central region exhibiting a tensile stress. In some embodiments, the glass sheet may be strengthened thermally by heating the glass to a temperature above the glass transition point and then rapidly quenching.

In various embodiments, glass sheet 52 may be chemically strengthened by ion exchange. In the ion exchange process, ions at or near the surface of the glass sheet are replaced by - or exchanged with - larger ions having the same valence or oxidation state. In those embodiments in which the glass sheet comprises an alkali aluminosilicate glass, ions in the surface layer of the article and the larger ions are monovalent alkali metal cations, such as Li⁺, Na⁺, K⁺, Rb⁺, and Cs⁺. Alternatively, monovalent cations in the surface layer may be replaced with monovalent cations other than alkali metal cations, such as Ag⁺ or the like. In such embodiments, the monovalent ions (or cations) exchanged into the glass sheet generate a stress.

Ion exchange processes are typically carried out by immersing a glass sheet in a molten salt bath (or two or more molten salt baths) containing the larger ions to be exchanged with the smaller ions in the glass sheet. It should be noted that aqueous salt baths may also be utilized. In addition, the composition of the bath(s) may include more than one type of larger ions (e.g., Na+ and K+) or a single larger ion. It will be appreciated by those skilled in the art that parameters for the ion exchange process, including, but not limited to, bath composition and temperature, immersion time, the number of immersions of the glass sheet in a salt bath (or baths), use of multiple salt baths, additional steps such as annealing, washing, and the like, are generally determined by the composition of the glass sheet (including the structure of the article and any crystalline phases present) and the desired DOC and CS of the glass sheet that results from strengthening. Exemplary molten bath compositions may include nitrates, sulfates, and chlorides of the larger alkali metal ion. Typical nitrates include KNO₃, NaNO₃, LiNO₃, NaSO₄ and combinations thereof. The temperature of the molten salt bath typically is in a range from about 380°C up to about 450°C, while immersion times range from about 15 minutes up to about 100 hours depending on glass sheet thickness, bath temperature and glass (or monovalent ion) diffusivity. However, temperatures and immersion times different from those described above may also be used.

In one or more embodiments, the glass sheet 52 may be immersed in a molten salt bath of 100% NaNO₃, 100% KNO₃, or a combination of NaNO₃ and KNO₃ having a temperature from about 370 °C to about 480 °C. In some embodiments, the glass sheet may be immersed in a molten mixed salt bath including from about 5% to about 90% KNO₃ and from about 10% to about 95% NaNO₃. In one or more embodiments, the glass sheet may be immersed in a second bath, after immersion in a first bath. The first and second baths may have different compositions and/or temperatures from one another. The immersion times in the first and second baths may vary. For example, immersion in the first bath may be longer than the immersion in the second bath.

In one or more embodiments, the glass sheet may be immersed in a molten, mixed salt bath including NaNO₃ and KNO₃ (e.g., 49%/51%, 50%/50%, 51%/49%) having a temperature less than about 420 °C (e.g., about 400 °C or about 380 °C). for less than about 5 hours, or even about 4 hours or less.

Ion exchange conditions can be tailored to provide a "spike" or to increase the slope of the stress profile at or near the surface of the resulting glass sheet. The spike may result in a greater surface CS value. This spike can be achieved by a single bath or multiple baths, with the bath(s) having a single composition or mixed composition, due to the unique properties of the glass compositions used in the glass sheets described herein.

In one or more embodiments, where more than one monovalent ion is exchanged into the glass sheet, the different monovalent ions may exchange to different depths within the glass sheet (and generate different magnitudes stresses within the glass sheet at different depths). The resulting relative depths of the stress-generating ions can be determined and cause different characteristics of the stress profile.

CS is measured using those means known in the art, such as by surface stress meter (FSM) using commercially available instruments such as the FSM-6000, manufactured by Orihara Industrial Co., Ltd. (Japan). Surface stress measurements rely upon the accurate measurement of the stress optical coefficient (SOC), which is related to the birefringence of the glass. SOC in turn is measured by those methods that are known in the art, such as fiber and four point bend methods, both of which are described in ASTM standard C770-98 (2013), entitled "Standard Test Method for Measurement of Glass Stress-Optical Coefficient," the contents of which are incorporated herein by reference in their entirety, and a bulk cylinder method. As used herein CS may be the "maximum compressive stress" which is the highest compressive stress value measured within the compressive stress layer. In some embodiments, the maximum compressive stress is located at the surface of the glass sheet. In other embodiments, the maximum compressive stress may occur at a depth below the surface, giving the compressive profile the appearance of a "buried peak."

DOC may be measured by FSM or by a scattered light polariscope (SCALP) (such as the SCALP-04 scattered light polariscope available from Glasstress Ltd., located in Tallinn Estonia), depending on the strengthening method and conditions. When the glass sheet is chemically strengthened by an ion exchange treatment, FSM or SCALP may be used depending on which ion is exchanged into the glass sheet. Where the stress in the glass sheet is generated by exchanging potassium ions into the glass sheet, FSM is used to measure DOC. Where the stress is generated by exchanging sodium ions into the glass sheet, SCALP is used to measure DOC. Where the stress in the glass sheet is generated by exchanging both potassium and sodium ions into the glass, the DOC is measured by SCALP, since it is believed the exchange depth of sodium indicates the DOC and the exchange depth of potassium ions indicates a change in the magnitude of the compressive stress (but not the change in stress from compressive to tensile); the exchange depth of potassium ions in such glass sheets is measured by FSM. Central tension or CT is the maximum tensile stress and is measured by SCALP.

In one or more embodiments, the glass sheet may be strengthened to exhibit a DOC that is described as a fraction of the thickness T of the glass sheet (as described herein). For example, in one or more embodiments, the DOC may be in the range of about 0.05T to about 0.25T. In some instances, the DOC may be in the range of about 20 µm to about 300 µm. In one or more embodiments, the strengthened glass sheet 52 may have a CS (which may be found at the surface or a depth within the glass sheet) of about 200 MPa or greater, about 500 MPa or greater, or about 1050 MPa or greater. In one or more embodiments, the strengthened glass sheet may have a maximum tensile stress or central tension (CT) in the range of about 20 MPa to about 100 MPa.

Suitable glass compositions for use as glass sheet 52 include soda lime glass, aluminosilicate glass, borosilicate glass, boroaluminosilicate glass, alkali-containing aluminosilicate glass, alkali-containing borosilicate glass, and alkali-containing boroaluminosilicate glass.

Unless otherwise specified, the glass compositions disclosed herein are described in mole percent (mol%) as analyzed on an oxide basis.

In one or more embodiments, the glass composition may include SiO₂ in an amount in a range from about 66 mol% to about 80 mol%. In one or more embodiments, the glass composition includes Al₂O₃ in an amount of about 3 mol% to about 15 mol%. In one or more embodiments, the glass article is described as an aluminosilicate glass article or including an aluminosilicate glass composition. In such embodiments, the glass composition or article formed therefrom includes SiO₂ and Al₂O₃ and is not a soda lime silicate glass.

In one or more embodiments, the glass composition comprises B₂O₃ in an amount in the range of about 0.01 mol% to about 5 mol%. However, in one or more embodiments, the glass composition is substantially free of B₂O₃. As used herein, the phrase "substantially free" with respect to the components of the composition means that the component is not actively or intentionally added to the composition during initial batching, but may be present as an impurity in an amount less than about 0.001 mol%.

In one or more embodiments, the glass composition optionally comprises P₂O₅ in an amount of about 0.01 mol% to 2 mol%. In one or more embodiments, the glass composition is substantially free of P₂O₅.

In one or more embodiments, the glass composition may include a total amount of R₂O (which is the total amount of alkali metal oxide such as Li₂O, Na₂O, K₂O, Rb₂O, and Cs₂O) that is in a range from about 8 mol% to about 20 mol%. In one or more embodiments, the glass composition may be substantially free of Rb₂O, Cs₂O or both Rb₂O and Cs₂O. In one or more embodiments, the R₂O may include the total amount of Li₂O, Na₂O and K₂O only. In one or more embodiments, the glass composition may comprise at least one alkali metal oxide selected from Li₂O, Na₂O and K₂O, wherein the alkali metal oxide is present in an amount greater than about 8 mol% or greater.

In one or more embodiments, the glass composition comprises Na₂O in an amount in a range from about from about 8 mol% to about 20 mol%. In one or more embodiments, the glass composition includes K₂O in an amount in a range from about 0 mol% to about 4 mol%. In one or more embodiments, the glass composition may be substantially free of K₂O. In one or more embodiments, the glass composition is substantially free of Li₂O. In one or more embodiments, the amount of Na₂O in the composition may be greater than the amount of Li₂O. In some instances, the amount of Na₂O may be greater than the combined amount of Li₂O and K₂O. In one or more alternative embodiments, the amount of Li₂O in the composition may be greater than the amount of Na₂O or the combined amount of Na₂O and K₂O.

In one or more embodiments, the glass composition may include a total amount of RO (which is the total amount of alkaline earth metal oxide such as CaO, MgO, BaO, ZnO and SrO) in a range from about 0 mol% to about 2 mol%. In one or more embodiments, the glass composition includes CaO in an amount less than about 1 mol%. In one or more embodiments, the glass composition is substantially free of CaO. In some embodiments, the glass composition comprises MgO in an amount from about 0 mol% to about 7 mol%.

In one or more embodiments, the glass composition comprises ZrO₂ in an amount equal to or less than about 0.2 mol%. In one or more embodiments, the glass composition comprises SnO₂ in an amount equal to or less than about 0.2 mol%.

In one or more embodiments, the glass composition may include an oxide that imparts a color or tint to the glass articles. In some embodiments, the glass composition includes an oxide that prevents discoloration of the glass article when the glass article is exposed to ultraviolet radiation. Examples of such oxides include, without limitation oxides of: Ti, V, Cr, Mn, Fe, Co, Ni, Cu, Ce, W, and Mo.

In one or more embodiments, the glass composition includes Fe expressed as Fe₂O₃, wherein Fe is present in an amount up to 1 mol%. Where the glass composition includes TiO₂, TiO₂ may be present in an amount of about 5 mol% or less.

An exemplary glass composition includes SiO₂ in an amount in a range from about 65 mol% to about 75 mol%, Al₂O₃ in an amount in a range from about 8 mol% to about 14 mol%, Na₂O in an amount in a range from about 12 mol% to about 17 mol%, K₂O in an amount in a range of about 0 mol% to about 0.2 mol%, and MgO in an amount in a range from about 1.5 mol% to about 6 mol%. Optionally, SnO₂ may be included in the amounts otherwise disclosed herein. It should be understood, that while the preceding glass composition paragraphs express approximate ranges, in other embodiments, glass sheet 52 may be made from any glass composition falling with any one of the exact numerical ranges discussed above.
Aspect (1) of this disclosure pertains to a method of forming a glass article, comprising:
   bending a glass sheet over a forming surface, the forming surface defining a first shape comprising a first curvature having a first radius of curvature of 1000 mm or less and the glass sheet comprising a first major surface in contact with the forming surface and a second major surface opposite to the first major surface; adhering a frame to the second major surface of the glass sheet, the frame comprising a frame support surface defining a second shape comprising a second curvature having a second radius of curvature of 1000 mm or less; applying a total force to the glass sheet so that the glass sheet forms a third shape comprising a third curvature having a third radius of curvature of 1000 mm or less; wherein the third shape deviates from the second shape by 2 mm or less across the frame support surface.
Aspect (2) of this disclosure pertains to the method of Aspect (1), further comprising inserting at least one spacer between the frame and second major surface of the glass sheet, wherein the spacer applies a first force to the second major surface of the glass sheet in at edges of the third curvature.
Aspect (3) of this disclosure pertains to the method of Aspect (2), wherein the at least one spacer comprises a projection from the frame support surface.
Aspect (4) of this disclosure pertains to the method of Aspect (3), wherein the at least one spacer comprises a buffer material in contact with the second major surface of the glass sheet.
Aspect (5) of this disclosure pertains to the method of Aspect (2), wherein the at least on spacer comprises a vertical arm and a horizontal projection, the horizontal projection configured to engage a slot on an interior or exterior of the frame.
Aspect (6) of this disclosure pertains to the method of any one of Aspects (2) through (5), wherein the at least one spacer defines a thickness of an adhesive layer adhering the frame to the second major surface of the glass sheet.
Aspect (7) of this disclosure pertains to the method of Aspect (1), further comprising a spacer comprising a vertical arm attached to the frame and a horizontal arm configured to provide a first force on the first major surface of the glass sheet to pull the glass sheet towards the frame support surface.
Aspect (8) of this disclosure pertains to the method of Aspect (1), wherein the forming surface comprises at least one retainer configured to apply a first force to the second major surface of the glass sheet to hold the glass sheet against the forming surface.
Aspect (9) of this disclosure pertains to the method of Aspect (8), wherein the at least one retainer slides laterally over the forming surface to apply the first force to an edge of the glass sheet.
Aspect (10) of this disclosure pertains to the method of Aspect (8), wherein the at least one retainer comprises a post and a ramped surface radially projecting from the post, wherein the post swivels so that the ramped surface applies the first force to an edge of the glass sheet. Aspect (11) of this disclosure pertains to the method of Aspect (8), wherein the at least one retainer comprises an arm configured to rotate into a position in which the arm applies the first force to an edge of the glass sheet.
Aspect (12) of this disclosure pertains to the method of any one of Aspects (8) through (11), wherein the at least one retainer is spring actuated.
Aspect (13) of this disclosure pertains to the method of any one of Aspects (8) through (11), wherein the at least one retainer is electro-mechanically actuated.
Aspect (14) of this disclosure pertains to the method of Aspect (1), wherein the frame is held by a clamping cover comprising a spacer disposed around the frame and wherein applying the total force comprises pressing the spacer against the glass sheet at a first force.
Aspect (15) of this disclosure pertains to the method of any one of Aspects (1) through (14), wherein the first force equals the total force.
Aspect (16) of this disclosure pertains to the method of any one of Aspects (1) through (14), wherein the forming surface comprises a chuck configured to create a vacuum force between the second major surface of the glass sheet and the forming surface.
Aspect (17) of this disclosure pertains to the method of Aspect (16), wherein the first force and the vacuum force equal the total force.
Aspect (18) of this disclosure pertains to the method of any one of Aspects (1) through (17), wherein the total force is greater than an area of the first major surface multiplied by atmospheric pressure.
Aspect (19) of this disclosure pertains to the method of any one of Aspects (1) through (18), wherein each of the first radius of curvature, the second radius of curvature, and third radius of curvature is 250 mm or less.
Aspect (20) of this disclosure pertains to the method of any one of Aspects (1) through (19), wherein the third shape deviates from the second shape by 0.2 mm or less across the frame support surface.
Aspect (21) of this disclosure pertains to the method of any one of Aspects (1) through (20), wherein the glass sheet comprises a maximum thickness between the first major surface and the second major surface of 0.3 mm to 2.0 mm.
Aspect (22) of this disclosure pertains to the method of Aspect (1), wherein the first radius of curvature is less than the second radius of curvature and wherein the first radius of curvature is selected so that the third shape of the glass sheet is produced by deflection from the first shape of the forming surface of the chuck.
Aspect (23) of this disclosure pertains to a system for forming a glass article, the glass article comprising a glass sheet adhered to a frame, the system comprising: a chuck comprising a forming surface including a first curvature having a first radius of curvature of 1000 mm or less; at least one retainer configured to apply a first force to the glass sheet to hold the glass sheet against the forming surface.
Aspect (24) of this disclosure pertains to the system of Aspect (23), wherein the at least one retainer slides laterally over the forming surface to apply the first force to an edge of the glass sheet.
Aspect (25) of this disclosure pertains to the system of Aspect (23), wherein the at least one retainer comprises a post and a ramped surface radially projecting from the post, wherein the post swivels so that the ramped surface applies the first force to an edge of the glass sheet. Aspect (26) of this disclosure pertains to the system of Aspect (23), wherein the at least one retainer comprises an arm configured to rotate into a position in which the arm applies the first force to an edge of the glass sheet.
Aspect (27) of this disclosure pertains to the system of any one of Aspects (23) through (26), wherein the at least one retainer is spring actuated.
Aspect (28) of this disclosure pertains to the system of any one of Aspects (23) through (26), wherein the at least one retainer is electro-mechanically actuated.
Aspect (29) of this disclosure pertains to the system of any one of Aspects (23) through (28), wherein the chuck is configured to create a vacuum force between the glass sheet and the forming surface.
Aspect (30) of this disclosure pertains to the system of Aspect (29), wherein the first force and the vacuum force equal a total force applied to the glass sheet to hold the glass sheet against the forming surface of the chuck.
Aspect (31) of this disclosure pertains to the system of Aspect (30), wherein the total force is greater than a surface area of the glass sheet in contact with the forming surface multiplied by atmospheric pressure.
Aspect (32) of this disclosure pertains to the system of any one of Aspects (23) through (31), wherein the first radius of curvature is 250 mm or less.
Aspect (33) of this disclosure pertains to the system of any one of Aspects (23) through (32), configured to prevent a shape deviation between the glass sheet and the frame of greater than 2 mm.
Aspect (34) of this disclosure pertains to a system for forming a glass article, the glass article comprising a glass sheet adhered to a frame, the system comprising: a chuck comprising a forming surface including a first curvature having a first radius of curvature of 1000 mm or less;
   a clamping cover configured to hold the frame, the clamping cover comprising a spacer disposed adjacent to the frame; wherein the spacer applies a first force to the glass sheet during forming of the glass article.
Aspect (35) of this disclosure pertains to the system of Aspect (34), wherein the chuck is configured to create a vacuum force between the glass sheet and the forming surface.
Aspect (36) of this disclosure pertains to the system of Aspect (35), wherein the first force and the vacuum force equal a total force applied to the glass sheet to hold the glass sheet against the forming surface of the chuck.
Aspect (37) of this disclosure pertains to the system of Aspect (36), wherein the total force is greater than a surface area of the glass sheet in contact with the forming surface multiplied by atmospheric pressure.
Aspect (38) of this disclosure pertains to the system of any one of Aspects (34) through (37), wherein the first radius of curvature is 250 mm or less.
Aspect (39) of this disclosure pertains to the system of any one of Aspects (34) through (38), configured to prevent a shape deviation between the glass sheet and the frame of greater than 2 mm.
Aspect (40) of this disclosure pertains to a glass article, comprising: a glass sheet comprising a first major surface and a second major surface opposite to the first major surface, the second major surface defining a first shape comprising a first curvature having a first radius of curvature of 250 mm or less; a frame adhered to the second major surface of the glass sheet, the frame comprising a frame support surface defining a second shape comprising a second curvature having a second radius of curvature of 250 mm or less; wherein the first shape deviates from the second shape by 0.2 mm or less across the frame support surface.
Aspect (41) of this disclosure pertains to the glass article of Aspect (40), further comprising at least one spacer positioned between the frame support surface and the second major surface of the glass sheet.
Aspect (42) of this disclosure pertains to the glass article of Aspect (41), wherein the at least one spacer comprises a projection from the frame support surface.
Aspect (43) of this disclosure pertains to the glass article of Aspect (42), wherein the at least one spacer comprises a buffer material in contact with the second major surface of the glass sheet. Aspect (44) of this disclosure pertains to the glass article of Aspect (41), wherein the at least on spacer comprises a vertical arm and a horizontal projection, the horizontal projection configured to engage a slot on an interior or exterior of the frame.
Aspect (45) of this disclosure pertains to the glass article of any one of Aspects (40) through (44), wherein the at least one spacer defines a thickness of an adhesive layer adhering the frame to the second major surface of the glass sheet.
Aspect (46) of this disclosure pertains to the glass article of any one of Aspects (40) through (45), wherein the glass sheet comprises a maximum thickness between the first major surface and the second major surface of 0.3 mm to 2.0 mm.

Unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is in no way intended that any particular order be inferred. In addition, as used herein, the article "a" is intended to include one or more than one component or element, and is not intended to be construed as meaning only one.

It will be apparent to those skilled in the art that various modifications and variations can be made without departing from the spirit or scope of the disclosed embodiments. Since modifications, combinations, sub-combinations and variations of the disclosed embodiments incorporating the spirit and substance of the embodiments may occur to persons skilled in the art, the disclosed embodiments should be construed to include everything within the scope of the appended claims and their equivalents.

## Claims

1. A method of forming a glass article, comprising:
bending a glass sheet over a forming surface, the forming surface defining a first shape comprising a first curvature having a first radius of curvature of 1000 mm or less and the glass sheet comprising a first major surface in contact with the forming surface and a second major surface opposite to the first major surface;
adhering a frame to the second major surface of the glass sheet, the frame comprising a frame support surface defining a second shape comprising a second curvature having a second radius of curvature of 1000 mm or less;
applying a total force to the glass sheet so that the glass sheet forms a third shape comprising a third curvature having a third radius of curvature of 1000 mm or less;
wherein the third shape deviates from the second shape by 2 mm or less across the frame support surface.

2. The method of claim 1, further comprising inserting at least one spacer between the frame and second major surface of the glass sheet, wherein the spacer applies a first force to the second major surface of the glass sheet in at edges of the third curvature.

3. The method of claim 2, wherein the at least one spacer comprises a projection from the frame support surface.

4. The method of one of claims 2 or 3, wherein the at least on spacer comprises a vertical arm and a horizontal projection, the horizontal projection configured to engage a slot on an interior or exterior of the frame.

5. The method of any of claims 2-4, wherein the at least one spacer defines a thickness of an adhesive layer adhering the frame to the second major surface of the glass sheet.

6. A system for forming a glass article, the glass article comprising a glass sheet adhered to a frame, the system comprising:
a chuck comprising a forming surface including a first curvature having a first radius of curvature of 1000 mm or less;
at least one retainer configured to apply a first force to the glass sheet to hold the glass sheet against the forming surface.

7. The system of claim 6, wherein the at least one retainer slides laterally over the forming surface to apply the first force to an edge of the glass sheet.

8. The system of one of claims 6 or 7, wherein the at least one retainer comprises a post and a ramped surface radially projecting from the post, wherein the post swivels so that the ramped surface applies the first force to an edge of the glass sheet.

9. The system of one of claims 6 to 8, wherein the at least one retainer comprises an arm configured to rotate into a position in which the arm applies the first force to an edge of the glass sheet.

10. The system according to any of claims 6-9, wherein the at least one retainer is spring actuated or is electro-mechanically actuated.

11. A glass article, comprising:
a glass sheet comprising a first major surface and a second major surface opposite to the first major surface, the second major surface defining a first shape comprising a first curvature having a first radius of curvature of 250 mm or less;
a frame adhered to the second major surface of the glass sheet, the frame comprising a frame support surface defining a second shape comprising a second curvature having a second radius of curvature of 250 mm or less;
wherein the first shape deviates from the second shape by 0.2 mm or less across the frame support surface.

12. The glass article of claim 11, further comprising at least one spacer positioned between the frame support surface and the second major surface of the glass sheet.

13. The glass article of claim 12, wherein the at least one spacer comprises one of
a projection from the frame support surface, and
a buffer material in contact with the second major surface of the glass sheet.

14. The glass article of any of claims 11-13, wherein the at least one spacer defines a thickness of an adhesive layer adhering the frame to the second major surface of the glass sheet.

15. The glass article of any of claims 11-14, wherein the glass sheet comprises a maximum thickness between the first major surface and the second major surface of 0.3 mm to 2.0 mm.
